Europäisches Patentamt

European Patent Office

Office européen des brevets

(11) Veröffentlichungsnummer: **0 532 961 A1**

# EUROPÄISCHE PATENTANMELDUNG

(21) Anmeldenummer: **92114800.3**

(22) Anmeldetag: **29.08.92**

(51) Int. Cl.5: **C08F 283/02**, D06M 15/00,
//(C08F283/02,220:06)

Geänderte Patentansprüche gemäss Regel 86
(2) EPÜ.

(30) Priorität: **20.09.91 DE 4131338**

(43) Veröffentlichungstag der Anmeldung:
**24.03.93 Patentblatt 93/12**

(84) Benannte Vertragsstaaten:
**DE ES FR GB IT**

(71) Anmelder: **BASF Aktiengesellschaft**
**Carl-Bosch-Strasse 38**
**W-6700 Ludwigshafen(DE)**

(72) Erfinder: **Wirth, Thomas, Dr.**
**Mundenheimer Strasse 174**
**W-6700 Ludwigshafen(DE)**
Erfinder: **Schoepke, Holger, Dr.**
**Bannholzweg 49**
**W-6903 Neckargemuend(DE)**
Erfinder: **Sendhoff, Norbert, Dr.**
**Auf der Wart 16**
**W-6718 Gruenstadt(DE)**
Erfinder: **Seyffer, Hermann, Dr.**
**Maass-Strasse 4**
**W-6900 Heidelberg(DE)**

(54) **Pfropfcopolymerisate von Sulfonsäuregruppen enthaltenden Polyestern als Propfgrundlage, Verfahren zu ihrer Herstellung und ihre Verwendung.**

(57) Pfropfcopolymerisate, die erhältlich sind durch Copolymerisieren von
(A) Monomermischungen aus
(a) 50 bis 95 Gew.-% mindestens eines $C_1$-$C_8$-Alkylesters der Acrylsäure und/oder der Methacrylsäure,
(b) 5 bis 50 Gew.-% mindestens einer monoethylenisch ungesättigten Carbonsäure und/oder mindestens eines Anhydrids einer monoethylenisch ungesättigten Carbonsäure sowie ggf. anderen wasserlöslichen oder wasserunlöslichen monoethylenisch ungesättigten Comonomeren
in Gegenwart von
(B) Sulfonsäure- und/oder Sulfonatgruppen enthaltenden wasserlöslichen oder wasserdispergierbaren Polyestern
im Gewichtsverhältnis (A):(B) von 5:95 bis 95:5 und unter Einwirkung von Radikale bildenden Polymerisationsinitiatoren, ein Verfahren zur Herstellung der Pfropfcopolymerisate durch Polymerisieren der Monomermischungen (A) in Gegenwart der Sulfonsäuregruppen enthaltenden Polyester (D) und Verwendung der Pfropfcopolymerisate als Schlichtemittel.

Die Erfindung betrifft Pfropfcopolymerisate, die durch Pfropfen von Sulfonsäuregruppen enthaltenden Polyestern als Pfropfgrundlage mit Mischungen aus Acrylsäure- und/oder Methacrylsäureestern und monoethylenisch ungesättigten Carbonsäuren oder den entsprechenden Anhydriden unter Einwirkung von Radikale bildenden Polymerisationsinitiatoren erhältlich sind, sowie die Herstellung dieser Pfropfcopolymerisate und ihre Verwendung als Schlichtemittel.

Aus der DE-A-31 23 598 sind Bindemittel für wäßrige Überzugsmassen bekannt. Sie werden durch Polymerisation von ethylenisch ungesättigten Monomeren wie Estern der Acrylsäure und/oder Methacrylsäure in Gegenwart von anionischen Kunstharzen, wie Carboxylgruppen tragenden Polyesterharzen, in wäßriger Phase in Gegenwart von Polymerisationsinitiatoren hergestellt. Die Pfropfcopolymerisate werden dadurch hergestellt, daß man die anionischen Harze in den Monomeren löst, durch Zugabe von Wasser eine Emulsion bildet und die Emulsion bei erhöhter Temperatur in Gegenwart von Radikale bildenden Verbindungen polymerisiert. Die so erhältlichen Pfropfcopolymerisate werden vorzugsweise als Bindemittel sowie in anionisch abscheidbaren Elektrotauchlacken verwendet.

Aus Ullmanns Encyklopädie der Technischen Chemie, Verlag Chemie Weinheim, 4. Aufl., Band 23, Seite 16 (1983), sind Copolymerisate auf der Basis von Acrylsäure- und Methacrylsäureestern bekannt, die als Schlichtemittel verwendet werden. Die mit diesen Copolymerisaten geschlichteten Filamentfäden verkleben jedoch bei hoher Luftfeuchtigkeit in einem unerwünschten Ausmaß. Die Wirksamkeit dieser Schlichtemittel ist völlig unzureichend, um damit geschlichtete Filamentfäden auf hochtourigen Webmaschinen verarbeiten zu können.

Aus der FR-A-2 291 314 sind Schlichtemittel bekannt, die aus einer Mischung mit einem überwiegenden Gehalt an Copolymerisaten aus Vinylestern von gesättigten Carbonsäuren und Estern der Acrylsäure oder Methacrylsäure und bis zu 40 % eines sulfogruppenenthaltenden Polyesters bestehen. Solche Schlichtemittelmischungen sind für den Einsatz in feuchten, heißen Klimazonen oder für die Verarbeitung des geschlichteten Materials auf Wasserdüsenwebmaschinen nicht geeignet. Die Schlichtewirkung der Mischung ergibt sich im wesentlichen aus der Wirkung der in der Mischung enthaltenden Einzelkomponenten, d.h. je größer der Anteil der Polyesterkomponente in der Mischung ist, desto höher ist die Klebkraft der Schlichtmittelmischung, um so stärker ist jedoch auch die gefürchtete Blockingneigung (Verklebung der geschlichteten Fäden im Kettbaum) insbesondere bei Feuchtigkeitseinfluß. Mischungen verschiedenartiger Schlichten zeigen häufig Unverträglichkeiten zwischen den Komponenten, so daß im Extremfall eine Entmischung der Schlichteflotten eintreten kann. Aber auch beim Trocknen der geschlichteten Kettfäden kann es beim Einsatz von Schlichtemittelmischungen zu Inhomogenitäten des Schlichtefilms kommen.

Aus der WO-A-91/08237 ist bekannt, daß sulfat- und/oder sulfonatgruppenhaltige Polyester und/oder Polyamide als Stabilisatoren bei der Emulsionspolymerisation von ethylenisch ungesättigten Monomeren in Mengen von 0,5 bis 10 Gew.-%, bezogen auf die eingesetzten Monomeren, verwendet werden. Die entstehenden Polymerdispersionen werden in Klebstoffen, in Appreturmitteln für Textilien und als Bindemittel in Dispersionsfarben eingesetzt.

Der vorliegenden Erfindung liegt die Aufgabe zugrunde, neue Copolymerisate zur Verfügung zu stellen, die insbesondere als Schlichtemittel für Filamentgarne einsetzbar sind.

Die Aufgabe wird erfindungsgemäß gelöst mit Pfropfcopolymerisaten von Sulfonsäuregruppen enthaltenden Polyestern als Pfropfgrundlage. Die Pfropfcopolymerisate sind dadurch gekennzeichnet, daß sie erhältlich sind durch Copolymerisieren von

(A) Monomermischungen aus

(a) 50 bis 95 Gew.-% mindestens eines $C_1$-$C_8$-Alkylesters der Acrylsäure und/oder der Methacrylsäure,

(b) 5 bis 50 Gew.-% mindestens einer monoethylenisch ungesättigten Carbonsäure und/oder mindestens eines Anhydrids einer monoethylenisch ungesättigten Carbonsäure,

(c) 0 bis 20 Gew.-% anderen wasserlöslichen monoethylenisch ungesättigten Comonomeren und

(d) 0 bis 10 Gew.-% anderen wasserunlöslichen monoethylenisch ungesättigten Comonomeren

in Gegenwart von

(B) Sulfonsäure- und/oder Sulfonatgruppen enthaltenden wasserlöslichen oder wasserdispergierbaren Polyestern

im Gewichtsverhältnis (A):(B) von 5:95 bis 95:5 und unter Einwirkung von Radikale bildenden Polymerisationsinitiatoren. Das Gewichtsverhältnis (A):(B) beträgt vorzugsweise 1:1 bis 5:1.

Die beschriebenen Pfropfcopolymerisate werden dadurch hergestellt, daß man die oben angegebenen Monomermischungen in Gegenwart von Sulfonsäure- und/oder Sulfonatgruppen enthaltenden wasserlöslichen oder wasserdispergierbaren Polyestern im Gewichtsverhältnis (A):(B) von 5:95 bis 95:5 nach Art einer Lösungspolymrisation oder einer Emulsionspolymerisation in Wasser unter Einwirkung Radikale bildender Polymerisationsinitiatoren polymerisiert. Die beschriebenen Pfropfcopolymerisate werden als Schlichtemittel verwendet.

Sulfonsäuregruppen enthaltende Polyester sind beispielsweise aus der obenangegebenen FR-A-2 291 314 und der US-A-3 546 008 bekannt. Sie werden beispielsweise durch Kondensation von sulfogruppenhaltigen Dicarbonsäuren wie beispielsweise Sulfoisophthalsäure mit Diolen, wie 2 bis 8 Kohlenstoffatomen enthaltenden Diolen, wie Ethylenglykol, Diethylenglykol oder 1,4-Hydroxymethylcyclohexan hergestellt. Bei der Kondensation können darüber hinaus aromatische Di- und Tricarbonsäuren mitverwendet werden. Als Pfropfgrundlage für die beanspruchten Pfropfcopolymerisate werden vorzugsweise Sulfogruppen enthaltende Polyester eingesetzt, deren Molekulargewicht (Gewichtsmittel) 15 000 bis 300 000, vorzugsweise 30 000 bis 150 000 beträgt und die eine Säurezahl von 1 bis 100, vorzugsweise 5 bis 60 mg KOH/g Polyester haben.

Die Monomermischungen enthalten als Komponente (a) 50 bis 95, vorzugsweise 70 bis 80 Gew.-% mindestens eines $C_1$-$C_8$-Alkylesters der Acrylsäure und/oder der Methacrylsäure. Geeignete Monomere dieser Gruppe sind beispielsweise Methylacrylat, Ethylacrylat, n-Propylacrylat, iso-Propylacrylat, sec.-Butylacrylat, tert.-Butylacrylat, Methylmethacrylat, Ethylmethacrylat, n-Propylmethacrylat, iso-Propylmethacrylat, sec.-Butylmethacrylat, tert.-Butylmethacrylat, n-Pentylacrylat, n-Hexylacrylat, 2-Ethylhexylacrylat, n-Heptylacrylat, n-Octylacrylat, n-Pentylmethacrylat, n-Hexylmethacrylat, 2-Ethylhexylmethacrylat, n-Heptylacrylat und n-Octylmethacrylat. Besonders bevorzugte Monomere dieser Gruppe sind Methylacrylat, Methylmethacrylat, Ethylacrylat, n-Butylacrylat und n-Butylmethacrylat. Die Verbindungen können bei der Herstellung der Pfropfcopolymerisate entweder allein oder in Mischung untereinander eingesetzt werden, z.B. eignen sich als Komponente (a) Mischungen aus Methylmethacrylat und n-Butylacrylat oder Mischungen aus Methylmethacrylat, Ethylacrylat und n-Butylacrylat, Mischungen aus Methylmethacrylat, Ethylacrylat, Methylacrylat und n-Butylacrylat, Mischungen aus Methylmethacrylat, n-Butylacrylat und n-Butylmethacrylat.

Die Monomermischungen enthalten als Verbindungen der Komponente (b) 5 bis 50, vorzugsweise 5 bis 20 Gew.-% mindestens einer monoethylenisch ungesättigten Carbonsäure und/oder mindestes eines Anhydrids einer monoethylenisch ungesättigten Carbonsäure. Geeignete Verbindungen dieser Art sind beispielsweise Acrylsäure, Methacrylsäure, Crotonsäure, Maleinsäure, Fumarsäure, Itaconsäure und - soweit technisch zugänglich - die Anhydride der monoethylenisch ungesättigten Carbonsäuren, z.B. Maleinsäureanhydrid und Itaconsäureanhydrid. Vorzugsweise verwendet man als Verbindungen der Komponente (b) bei der Herstellung der Pfropfcopolymerisate Acrylsäure, Methacrylsäure oder Mischungen aus Acrylsäure oder Methacrylsäure.

Die Monomermischungen können ggf. bis zu 20 Gew.-% andere wasserlösliche monoethylenisch ungesättigte Comonomere enthalten, z.B. Acrylamid, Methacrylamid, Allylalkohol, Acrylnitril, Natriumvinylsulfonat, 2-Acrylamido-2-methyl-propansulfonsäure, Styrolsulfonsäure, 2-Sulfoethylmethacrylat, Vinylphosphonsäure, N-Vinylimidazol, N-Vinylimidazolin, 2-Methyl-1-Vinylimidazolin und Methacrylnitril. Sofern die Verbindungen der Gruppe (c) bei der Pfropfcopolymerisation eingesetzt werden, verwendet man vorzugsweise Acrylnitril, Methacrylnitril und Natriumvinylsulfonat. Von besonderem Interesse sind solche Pfropfcopolymerisate, die durch Copolymerisieren von Monomermischungen (A) erhältlich sind, die als Komponente (c) 1,5 bis 18 Gew.-% Acrylnitril, Methacrylnitril und/oder Natriumvinylsulfonat enthalten.

Die Monomermischungen können ggf. bis zu 10 Gew.-% andere wasserunlösliche monoethylenisch ungesättigte Comonomere enthalten, z.B. Vinylaromaten, wie Styrol, Methylstyrol, Vinylacetat, Vinylpropionat, N-Vinylpyrrolidon und Ester von ethylenisch ungesättigten Dicarbonsäuren, wie Di-n-Butylester der Maleinsäure. Sofern Verbindungen der Gruppe (d) bei der Pfropfcopolymerisation eingesetzt werden, verwendet man bevorzugt Styrol. Besonders bevorzugt sind solche Pfropfcopolymerisate, bei deren Herstellung die Monomermischugnen (A) als Komponente (c) 1,5 bis 18 Gew.-% Acrylnitril, Methacrylnitril und/oder Natriumvinylsulfonat und als Komponente (d) 1 bis 7 Gew.-% Styrol enthalten.

Die erfindungsgemäßen Pfropfcopolymerisate werden dadurch hergestellt, daß man

(A) Monomermischungen aus

(a) 50 bis 95 Gew.-% mindestens eines $C_1$-$C_8$-Alkylesters der Acrylsäure und/oder der Methacrylsäure,

(b) 5 bis 50 Gew.-% mindestens einer monoethylenisch ungesättigten Carbonsäure und/oder mindestens eines Anhydrids einer monoethylenisch ungesättigten Carbonsäure,

(c) 0 bis 20 Gew.-% anderen wasserlöslichen monoethylenisch ungesättigten Comonomeren und

(d) 0 bis 10 Gew.-% anderen wasserunlöslichen monoethylenisch ungesättigten Comonomeren

in Gegenwart von

(B) Sulfonsäure- und/oder Sulfonatgruppen enthaltenden wasserlöslichen oder wasserdispergierbaren Polyestern

im Gewichtsverhältnis (A):(B) von 5:95 bis 95:5, vorzugsweise 1:1 bis 5:1, nach Art einer Lösungspolymerisation oder einer Emulsionspolymerisation in Wasser unter Einwirkung Radikale bildender Polymerisationsinitiatoren polymerisiert.

Die Pfropfcopolymerisate werden vorzugsweise nach dem Verfahren der Emulsionspolymerisation in wäßrigem Medium hergestellt, wobei Polymerdispersionen anfallen.

Die Polymerisation erfolgt jeweils unter Einwirkung Radikale bildender Polymerisationsinitiatoren. Als Polymerisationsinitiatoren können die üblicherweise verwendeten Peroxo- oder Azoverbindungen, ggf. auch in Kombination mit Reduktionsmitteln, eingesetzt werden. Bezogen auf das Gewicht der zu polymerisierenden Monomeren setzt man üblicherweise 0,5 bis 2 Gew.-% der Initiatoren ein. Bevorzugt zum Einsatz gelangende Initiatoren sind Natrium- bzw. Kaliumperoxodisulfat, Dibenzoylperoxid, tert.-Butylperpivalat, tert.- Butylper-2-ethylhexanoat, Di-tert.-butylperoxid, tert.-Butylhydroperoxid, 2,5-Dimethyl-2,5-di(tert.-butylperoxi)- hexan, Cumolhydroperoxid und 4,4'-Azobisisobutyronitril.

Falls Reduktionsmittel als ein Bestandteil des Initiatorsystems in Betracht kommen, so setzt man vorzugsweise folgende Verbindungen ein: Hydrazin, Natriumsulfit, Natriumhydrogensulfit, Kaliumsulfit, Kaliumhydrogensulfit, Ammoniumsulfit, Ammoniumhydrogensulfit, Ascorbinsäure und Hydroxyaceton sowie dessen Derivate. Falls man Reduktionsmittel als Komponente des Initiatorsystems einsetzt, so betragen die Mengen 0,005 bis 2,0 Gew.-%, bezogen auf die Monomeren.

Die Emulsionspolymerisation kann in Abwesenheit von Emulgatoren durchgeführt werden. In diesem Fall übernimmt der wasserlösliche sulfogruppenhaltige Polyester die Funktion eines Schutzkolloids. Es ist jedoch auch möglich, die Emulsionspolymerisation wie sonst üblich in Gegenwart von Emulgatoren durchzuführen. Man kann anionische, kationische und nichtionische Emulgatoren sowie Mischungen von miteinander verträglichen Emulgatoren einsetzen, z.B. Mischungen aus kationischen und nichtionischen oder Mischungen aus anionischen und nichtionischen Emulgatoren. Falls bei der Emulsionspolymerisation Emulgatoren eingesetzt werden, so vorzugsweise anionische Emulgatoren, beispielsweise Laurylsulfat, Natriumstearat, Kaliumoleat, $C_{15}$-Paraffinsulfonat und Sorbitanester wie beispielsweise Sorbitanmonooleat und Sorbitanmonostearat. Beispiele für nichtionische Emulgatoren sind die Oxethylierungsprodukte von Laurylalkohol, Oleylalkohol, Stearylalkohol, Ölsäureamid, Stearinsäureamid sowie Oxethylate von Stearinsäure und Ölsäure mit einem Oxethylierungsgrad von jeweils 3 bis 20. Kationische Emulgatoren sind beispielsweise Ammonium-, Phosphonium- und Sulfoniumverbindungen, die jeweils mindestens eine langkettige Alkylkette als hydrophoben Molekülteil aufweisen, z.B. Trimethylstearylammoniumchlorid und 1- Methyl-2-talgalkyl-3-talgamidoethyl-imidazolinium-methosulfat.

Es können aber auch amphotere Emulgatoren wie z. B. Fettsäureamidoalkylbetaine und Aminoxide wie z. B. Fettsäureamidoalkyldimethylaminoxide als oberflächenaktive Substanzen bei der Emulsionspolymerisation eingesetzt werden.

Sofern bei der Emulsionspolymerisation Emulgatoren eingesetzt werden, beträgt die Menge bevorzugt 0,1 bis 2 Gew.-%, bezogen auf die Monomeren.

Zur Steuerung der Molekularmasse der Pfropfcopolymerisate können ggf. Regler bei der Pfropfcopolymerisation anwesend sein. Sofern man die Pfropfcopolymerisation in Gegenwart von Reglern durchführt, verwendet man vorzugsweise Tetrachlorkohlenstoff, Tetrabromkohlenstoff, Benzylbromid, Trichlorbromethan, Butylmercaptan, tert.-Dodecylmercaptan und Alkohole wie z. B. Isopropanol. Im Falle des Einsatzes von Reglern beträgt die davon verwendete Menge 0,1 bis 5 Gew.-%, bezogen auf die eingesetzten Monomeren. Besonders gute Schlichtemittel erhält man, wenn man tert.-Dodecylmercaptan in Mengen von 0,2 bis 1,0 Gew.-% in Kombination mit 1,0 bis 1,5 Gew.-% einer Peroxiverbindung, z.B. tert.-Butylhydroperoxid, bei der Copolymerisation einsetzt.

Die Pfropfcopolymerisation wird üblicherweise bei Temperaturen von etwa 20 bis 95° C, vorzugsweise bei 60 bis 90° C durchgeführt. Die Copolymerisation erfolgt zweckmäßigerweise unter Normaldruck, sie kann jedoch auch bei vermindertem oder erhöhtem Druck vorgenommen werden, z.B. in dem Bereich von 0,5 bis 5 bar. Die Reaktionszeiten betragen üblicherweise 1 bis 5, meistens 2 bis 3 Stunden. Verfahrenstechnisch geht man bei dem Emulsionszulaufverfahren in der Regel so vor, daß man eine wäßrige Lösung aus einem Teil der Initiatoren und ggf. der Emulgatoren und der Regler auf die Reaktionstemperatur erhitzt und die Monomeren in gleichen oder wechselnden Anteilen, vorzugsweise kontinuierlich, zuführt. Es ist jedoch auch möglich, einen Teil der Monomeren, bevorzugt 4 bis 20 Gew.-% der insgesamt zu polymerisierenden Monomeren zusammen mit dem Initiator und ggf. den Emulgatoren und Reglern vorzulegen, die vorgelegte Reaktionsmischung auf die Polymerisationstemperatur zu erhitzen und die Polymerisation zu starten und erst nach etwa 10 bis 30 Minuten nach dem Beginn der Polymerisation die restliche Menge der Monomeren zuzudosieren. Das wasserlösliche sulfogruppenenthaltende Polyesterharz kann ganz oder teilweise mit den Monomeren zugegeben werden oder ganz oder teilweise im Reaktionsgefäß vorgelegt werden. In einer bevorzugten Ausführungsform des Herstellverfahrens legt man 10 bis 50 Gew.-% des Polyesterharzes in der wäßrigen Lösung vor und dosiert die restliche Menge des Polyesterharzes zusammen mit den Monomeren in die polymerisierende Mischung. Falls das Sulfonsäuregruppen enthaltende Polyesterharz nicht im Reaktionsgefäß vorgelegt wird, kann es zeitgleich oder zeitversetzt mit den Monomeren in die Polymerisationsvorrichtung gegeben werden. Die restlichen Anteile der Initiatoren, ggf. der Emulgatoren und der Regler werden kontinuierlich oder absatzweise dem Reaktionsgemisch zugefügt. Falls man auf den Einsatz von Emulgatoren bei der Pfropfcopolymerisation verzichtet, emulgiert man zweckmäßigerweise die Monomeren in der wäßrigen Lösung eines Polyesterharzes und dosiert dann die Emulsion in die Polymerisationszone. Nach Abschluß der Zugabe der Monomeren wird die gebildete Polymerdispersion noch etwa 1 Stunde auf eine Temperatur erhitzt, bei der die Polymerisation erfolgte oder die unterhalb oder oberhalb der Polymerisationstemperatur liegt. Dadurch wird der Restmonomergehalt der Polymerdispersion erniedrigt. Besonders vorteilhaft ist es dabei, wenn man zur Entfernung der Restmonomeren in der Polymerdispersion noch weitere Initiatormengen zusetzt.

Die Pfropfcopolymerisation erfolgt bei pH-Werten in dem Bereich von 2 bis 5. Die Sulfonsäuregruppen enthaltenden wasserdispergierbaren Polyester liegen dabei in der Regel in teilweise neutralisierter Form vor, wobei sich das Verhältnis von Sulfonsäure- und Sulfonatgruppen enthaltenden wasserlöslichen oder wasserdispergierbaren Polyestern mit dem pH-Wert ändert. Die Konzentration der Komponenten (A) und (B) wird bei der Emulsionspolymerisation vorzugsweise so eingestellt, daß wäßrige Dispersionen mit Feststoffgehalten von vorzugsweise 20 bis 50 Gew.-% entstehen. Auch bei der Herstellung der erfindungsgemäßen Pfropfcopolymerisate nach dem Verfahren der Lösungspolymerisation wird die Konzentration der Komponenten (A) und (B) in dem Lösemittel so eingestellt, daß Polymerlösungen mit Feststoffgehalten von vorzugsweise 20 bis 50 Gew.-% entstehen. Die wäßrigen Polymerdispersionen bzw. die Polymerlösungen haben nach einer teilweise oder vollständigen Neutralisation vorzugsweise Feststoffgehalte von 18 bis 30 Gew.-%. Die Polymerkonzentrationen der Dispersionen oder Lösungen können jedoch auch unterhalb oder oberhalb der angegebenen Bereiche liegen.

Die erfindungsgemäßen Pfropfcopolymerisate haben K-Werte von vorzugsweise 25 bis 200. Der jeweils gewünschte K-Wert läßt sich in bekannter Weise durch die Auswahl der Polymerisationsbedingungen einstellen, z.B. Polymerisationstemperatur Initiatorkonzentration und Reglerkonzentration. Für die Anwendung als Schlichtemittel kommen insbesondere Pfropfcopolymerisate mit K-Werten von 30 bis 50 in Betracht.

Zur Herstellung von Schlichtemitteln überführt man die Pfropfcopolymerisate bevorzugt bei Temperaturen zwischen 50 und 85°C in wasserlösliche Salze, z.B. in die entsprechenden Natrium-, Calcium-, Magnesium-, Ammonium- oder $C_1$-$C_4$-Alkylammoniumsalze. In einigen Fällen ist es auch vorteilhaft, die sauren Gruppen der Pfropfcopolymerisate mit Alkanolaminen, wie Monoethanolamin, Diethanolamin, Triethanolamin oder auch mit Morpholin zu neutralisieren. Die sauren Gruppen der Pfropfcopolymerisate sind für die Anwendung als Schlichtemittel vorzugsweise zu mindestens 50 % neutralisiert. Zum Schlichten von Filamentgarnen verwendet man vorzugsweise partiell oder vollständig mit Ammoniak neutralisierte wäßrige Dispersionen der erfindungsgemäßen Pfropfcopolymerisate. Stapelfaserschlichten erhält man vorzugsweise durch Zugabe von Natronlauge, Natriumcarbonat oder Natriumhydrogencarbonat zu den wäßrigen Dispersionen der Pfropfcopolymerisate. Man kann die so erhältlichen Lösungen unmittelbar oder zusammen mit weiteren Komponenten als Schlichtemittel für Polyester-, Celluloseacetat-, Polyamid-, Viskose-, Baumwolle-, Baumwolle/Polyester-, Viskose/Polyester- und für Polyester/Wolle-Faser verwenden. Als Zusatzstoffe können den erfindungsgemäß zu verwendenden Schlichtemitteln vorteilhafterweise zugesetzt werden:

- Viskositätsregulatoren wie Alkohole oder viskositätserhöhende Polymere;
- Schlichtefette wie sulfatierte Fette und Öle und primäre Fettalkoholsulfate;
- Netzmittel wie sulfierte Öle, Fettalkoholsulfate und aromatische Sulfonate;
- Entschäumer wie Amide oder Ester von Fettsäuren und Silicone und
- Konservierungsmittel
- Antielektrostatika.

Weiterhin kommen Verdickungsmittel, Pigmente, Vernetzer, Füllstoffe, Verstärkungsmittel, Anti-Verfilmungshilfsmittel und Antioxidantien in Betracht.

Der pH-Wert der wäßrigen Schlichteflotten beträgt im allgemeinen 6.5 bis 8.0. Die erfindungsgemäßen Pfrofpcopolymerisate werden hauptsächlich als Schlichtemittel für die Verarbeitung von Stapelfaser- und Filamentgarnen eingesetzt. Sie dienen bevorzugt als Schlichtemittel für die Verarbeitung von Mikrofasergarnen, Multifilamentgarnen und texturierten oder glatten Filamentgarnen. Sie können außerdem zum vorübergehenden Oberflächenschutz von flächigen oder räumlichen Gebilden, beispielsweise Zeichnungen, Karten, Drucken, Fotos oder Bildern benutzt werden. Des weiteren eignen sie sich generell als Bindemittel, insbesondere auch als Papierverfestiger, Vliesverfestiger, Druckverdicker, Textilausrüstungsmittel, Bodenpflegemittel und Klebemittel.

Die erfindungsgemäßen Pfropfcopolymerisate zeichnen sich durch eine gute Schlichtewirkung aus. Sie haben gleichzeitig bei hoher Luftfeuchte eine hohe Filmhärte und damit eine geringe Neigung zum Verkleben der geschlichteten Filamentfäden. Ein besonderer Vorteil dieser Pfropfcopolymerisate ist die leichte Auswaschbarkeit vor der Verarbeitung der Garne.

Die K-Werte der Polymerisate wurden nach H. Fikentscher, Cellulosechemie, Band 13, 58-64 und 71-74 (1932), in Tetrahydrofuran bei 25°C und einer Polymerkonzentration von 0,5 Gew.-% bestimmt. Die in den Beispielen angegebenen Viskositäten der Pfropfcopolymerisate wurden in einem Brookfield-Viskosimeter bei 100 Upm und einer Temperatur von 20°C in wäßriger Lösung bei den jeweils angegebenen Konzentrationen gemessen.

Beispiele

Die nachstehend beschriebenen Pfropfcopolymerisate wurden nach dem Verfahren der Emulsionspolymerisation in Form wäßriger Lösungen erhalten. Hierzu emulgierte man die Monomeren unter Verwendung eines Emulgators in Wasser und fügte die Monomeremulsion und eine getrennt bereitete Initiatorlösung kontinuierlich zu einer auf Polymerisationstemperatur erwärmten wäßrigen Lösung eines Sulfonsäuregruppen enthaltenden Polyesterharzes. Nach Abschluß der Polymerisation fügte man soviel 25%iges wäßriges Ammoniak zur Polymerdispersion, bis sich das Pfropfcopolymerisat löste. In allen Fällen entstanden klare wäßrige Lösungen der entsprechenden Pfropfcopolymerisate.

Für sämtliche Beispiele wurde als Sulfonsäuregruppen enthaltendes Polyesterharz ein Reaktionsprodukt verwendet, das durch Kondensation von

| | |
|---|---|
| 0,86 mol | Diethylenglykol |
| 0,20 mol | 1,4-Hydroxymethylcyclohexan |
| 0,23 mol | Iso-Phthalsäure |
| 0,70 mol | Terephthalsäure und |
| 0,13 mol | Sulfoisophthalsäure |

bei 240°C hergestellt und durch Zugabe von wäßriger Natronlauge bis zu einem pH-Wert von 5,6 neutralisiert war. Das Harz hatte ein Molekulargewicht (Gewichtsmittel) von 89 000.

Beispiel 1

Nach der oben angegebenen allgemeinen Herstellvorschrift wird eine Lösung aus

| | |
|---|---|
| 698 g | Wasser |
| 0,28 g | eines $C_{15}$-Paraffinsulfonats |
| 1,1 g | Natriumvinylsulfonat |
| 162,6 g | einer 25%igen wäßrigen Lösung des oben beschriebenen Sulfonsäuregruppen enthaltenden Polyesterharzes |
| 102 g | des im folgenden angegebenen Zulaufs 2 |

vorgelegt, auf 80°C erwärmt und im Laufe von 2 bis 2,5 Stunden bei einer Temperatur von 85°C kontinuierlich mit den Zuläufen 1 und 2 versetzt. Der Zulauf 1 bestand aus einer Mischung von

| | |
|---|---|
| 613 g | Wasser |
| 1,56 g | eines $C_{15}$-Paraffinsulfonats |
| 0,5 g | Natriumvinylsulfonat |
| 1,6 g | tert.-Dodecylmercaptan |
| 56 g | Methacrylsäure |
| 196 g | n-Butylacrylat |
| 120 g | Methylmethacrylat und |
| 28 g | Acrylnitril. |

Der Zulauf 2 bestand aus einer Lösung von 5,6 g Natriumpersulfat in 200 g Wasser. Nach Zugabe von 25%igem wäßrigen Ammoniak erhielt man eine wäßrige Lösung mit einem Polymerisatgehalt von 20,9 Gew.-%. Diese Lösung hatte bei 20°C eine Viskosität von 38 mPa.s.

Beispiel 2

Nach der in Beispiel 1 gegebenen Vorschrift wird ein Pfropfcopolymerisat mit den im folgenden angegebenen Einsatzstoffen hergestellt. Im Polymerisationsgefäß werden

| | |
|---|---|
| 698,5 g | Wasser |
| 0,28 g | eines $C_{15}$-Paraffinsulfonats |
| 1,1 g | Natriumvinylsulfonat |
| 325,2 g | einer wäßrigen Lösung des obenbeschriebenen |
| | Sulfonsäuregruppen enthaltenden Polyesterharzes und |
| 104,5 g | des angegebenen Zulaufs 2 |

vorgelegt.

Zulauf 1 bestand aus einer Mischung von

| | |
|---|---|
| 643 g | Wasser |
| 1,6 g | tert.-Dodecylmercaptan |
| 56 g | Methacrylsäure |
| 196 g | n-Butylacrylat |
| 120 g | Methylmethacrylat und |
| 28 g | Acrylnitril |

Der Zulauf 2 bestand aus einer wäßrigen Lösung von 5,6 g Natriumpersulfat in 200 g Wasser. Nach Zugabe von Ammoniak erhält man eine klare wäßrige Lösung mit einem Polymerisatgehalt von 20,9 Gew.-%. Die wäßrige Polymerlösung hat bei 20°C eine Viskosität von 48 mPa.s.

Beispiel 3

Dieses Copolymerisat wurde analog Beispiel 1 mit der folgenden Vorlage sowie den Zuläufen 1 und 2 hergestellt.

| | |
|---|---|
| 698,0 g | Wasser |
| 0,28 g | eines C-15-Paraffinsulfonats |
| 1,1 g | Natriumvinylsulfonat |
| 487,8 g | Polyesterharz 25 %ig in Wasser |
| 107,6 g | Zulauf 1 |

Zulauf 1

| | |
|---|---|
| 673,0 g | Wasser |
| 1,56 g | eines C-15-Paraffinsulfonats |
| 100,5 g | Natriumvinylsulfonat |
| 1,6 g | tert.-Dodecylmercaptan |
| 56,0 g | Methacrylsäure |
| 196,0 g | n-Butylacrylat |
| 120,0 g | Methylmethacrylat |
| 28,0 g | Acrylnitril |

Zulauf 2

| | |
|---|---|
| 200,0 g | Wasser |
| 5,6 g | Natriumpersulfat |

Die enthaltene Lösung hatte einen Polymerisatgehalt von 20,9 Gew.-% und bei 20°C eine Viskosität von 55 mPa•s.

Beispiel 4

Dieses Copolymerisat wurde analog Beispiel 1 mit der folgenden Vorlage sowie den Zuläufen 1 und 2 hergestellt.

| | |
|---|---|
| 698,0 g | Wasser |
| 0,28 g | eines C-15-Paraffinsulfonats |
| 1,1 g | Natriumvinylsulfonat |
| 650,4 g | Polyesterharz 25 %ig in Wasser |
| 110,7 g | Zulauf 2 |

Zulauf 1

| | |
|---|---|
| 703,0 g | Wasser |
| 1,56 g | eines C-15-Paraffinsulfonats |
| 0,5 g | Natriumvinylsulfonat |
| 1,6 g | tert.-Dodecylmercaptan |
| 196,0 g | n-Butylacrylat |
| 120,0 g | Methylmethacrylat |
| 28,0 g | Acrylnitril |
| 56,0 g | Methacrylsäure |

Zulauf 2

| | |
|---|---|
| 200,0 g | Wasser |
| 5,6 g | Natriumpersulfat |

Die enthaltene Lösung hatte einen Polymerisatgehalt von 20,9 Gew.-% und bei 20°C eine Viskosität von 42 mPa•s.

Beispiel 5

Dieses Copolymerisat wurde analog Beispiel 1 mit der folgenden Vorlage sowie den Zuläufen 1 und 2 hergestellt.

| | |
|---|---|
| 488,0 g | Wasser |
| 0,2 g | eines C-15-Paraffinsulfonats |
| 150,8 g | Natriumvinylsulfonat |
| 569,0 g | Polyesterharz 25 %ig in Wasser |
| 75,7 g | Zulauf 1 |

Zulauf 1

| | |
|---|---|
| 513,0 g | Wasser |
| 1,08 g | eines C-15-Paraffinsulfonats |
| 0,3 g | Natriumvinylsulfonat |
| 1,1 g | tert.-Dodecylmercaptan |
| 137,2 g | n-Butylacrylat |
| 84,0 g | Methylmethacrylat |
| 19,6 g | Acrylnitril |
| 39,2 g | Methacrylsäure |

Zulauf 2

| | |
|---|---|
| 140,0 g | Wasser |
| 3,92 g | Natriumpersulfat |

Die erhaltene Lösung hatte einen Polymerisatgehalt von 20,9 Gew.-% und bei 2o°C eine Viskosität von 34 mPa•s.

Beispiel 6

Dieses Copolymerisat wurde analog Beispiel 1 mit der folgenden Vorlage sowie den Zuläufen 1 und 2 hergestellt.

| | |
|---|---|
| 418,0 g | Wasser |
| 0,16 g | eines C-15-Paraffinsulfonats |
| 0,7 g | Natriumvinylsulfonat |
| 731,7 g | Polyesterharz 25 %ig in Wasser |
| 72,5 g | Zulauf 1 |

Zulauf 1

| | |
|---|---|
| 481,0 g | Wasser |
| 1,6 g | eines C-15-Paraffinsulfonats |
| 0,3 g | Natriumvinylsulfonat |
| 1,0 g | tert.-Dodecylmercaptan |
| 117,6 g | n-Butylacrylat |
| 72,0 g | Methylmethacrylat |
| 16,8 g | Acrylnitril |
| 33,6 g | Methacrylsäure |

Zulauf 2

| 120,0 g | Wasser |
|---|---|
| 3,4 g | Natriumpersulfat |

Die erhaltene Lösung hatte einen Polymerisatgehalt von 20,9 Gew.-% und bei 20°C eine Viskosität von 40 mPa•s.

Beispiel 7

Dieses Copolymerisat wurde analog Beispiel 1 mit der folgenden Vorlage sowie den Zuläufern 1 und 2 hergestellt.

| 349,0 g | Wasser |
|---|---|
| 0,14 g | eines C-15-Paraffinsulfonats |
| 0,6 g | Natriumvinylsulfonat |
| 813,0 g | Polyesterharz 25 %ig in Wasser |
| 50,0 g | Zulauf 1 |

Zulauf 1

| 299,0 g | Wasser |
|---|---|
| 0,8 g | eines C-15-Paraffinsulfonats |
| 0,2 g | Natriumvinylsulfonat |
| 0,8 g | tert.-Dodecylmercaptan |
| 98,0 g | n-Butylacrylat |
| 60,0 g | Methylmethacrylat |
| 14,0 g | Acrylnitril |
| 28,0 g | Methacrylsäure |

Zulauf 2

| 100,0 g | Wasser |
|---|---|
| 2,8 g | Natriumpersulfat |

Die erhaltene Lösung hatte einen Polymerisatgehalt von 22,5 Gew.-% und bei 20°C eine Viskosität von 43 mPa•s.

Schlichte 1

Dieses Schlichtemittel wurde gemäß der in Beispiel 1 der FR-A-2 291 314 beschriebenen Weise als Abmischung von 100 Teilen eines Polyesters und 156 Teilen eines Vinylacetat-Acrylat-Copolymeren erhalten.

Schlichte 2

In einem Reaktor werden 1,06 Mol einer Glycolmischung, bestehend aus 0,86 Mol Diethylenglycol und 0,20 Mol Cyclohexandimethanol sowie 1,06 Mol einer Säuremischung, bestehend aus: 0,13 Mol Sulphoisophtalsäure als Natriumsalz, 0,23 Mol Isophthalsäure und 0,7 Mol Terephthalsäure unter ständigem

Rühren und N$_2$ Spülung zusammengeben. Die Temperatur wird auf 130°C gesteigert und es werden 0,33 Gew.-% (bezogen auf die Gewichtsmenge) Butylzinnsäure als Veresterungskatalysator zugegeben. Die Reaktionsmasse wird auf 155-160°C erhitzt. Dabei destilliert ein Teil des Reaktionswassers ab. Die Destillation wird so gesteuert, daß die Temperatur im Kolonnenkopf 130°C nicht übersteigt, dabei wird die Kesselinnentemperatur bis auf 240°C gesteigert. Sobald die Destillatmenge abnimmt, wird Vakuum angelegt. Das Vakuum wird vorsichtig bis auf 5 mbar gesteigert. Nach Ende der Destillation wird mit Stickstof belüftet und die noch heiße Schmelze in 80°C heißes Wasser ausgetragen. Die Menge des Vorlagewassers wird so gewählt, daß nach Auflösen der Schmelze eine 25 %ige Schlichtelösung entsteht. Man erhält eine gelblich bis braune Lösung.

Die Pendelhärte nach König DIN 53157 eines entsprechenden Schlichtefilms beträgt bei 68 % r.F. 147 und bei 80 % r.F. 41. Die Fadenschlußwerte der Schlichte liegen vor und nach Beanspruchung bei einem Wert < 20 %.

Schlichte 3

Eine Lösung aus

| | |
|---|---|
| 850,0 | Wasser |
| 2,0 g | eines C-15-Paraffinsulfonats |
| 3,0 g | Natriumvinylsulfonat |
| 3,0 g | Natriumpersulfat |

wurde nach dem Erwärmen auf 80°C im Laufe von 2 bis 2,5 Stunden bei 85°C kontinuierlich mit den Zuläufen 1 und 2 versetzt.

Zulauf 1

| | |
|---|---|
| 510,0 g | Wasser |
| 2,0 g | eines C-15-Paraffinsulfonats |
| 70,0 g | Methacrylsäure |
| 245,0 g | n-Butylacrylat |
| 150,0 g | Methylmethacrylat |
| 15,0 g | Styrol |
| 20,0 g | Acrylnitril |

Zulauf 2

| | |
|---|---|
| 100,0 g | Wasser |
| 2,0 g | Natriumpersulfat |

Anwendungstechnische Eigenschaften

Als anwendungstechnische Eigenschaften der erfindungsgemäßen Copolymerisate wurden der Fadenschluß, die Feuchtigkeitsempfindlichkeit und die Auswaschbarkeit ermittelt.
(A) Bestimmung des Fadenschlusses
Der Fadenschluß ist ein Maß für die Güte einer Schlichte in bezug auf den Schutz und die Stabilisierung des Fadens. Die Bestimmung des Fadenschlusses erfolgt mit dem Shirley-Filamentcounter, indem der Filamentfaden vor und nach dem Schlichten durchgeschnitten wird und aus den beim Schneiden gezählten Impulsen die Anzahl der freien, unverklebten Einzelfilamten ermittelt wird.
Das Rohgarn besitzt einen Manra-Wert von 100, d.h. 100 % der Einzelfilamente sind unverklebt. Je niedriger der Manra-Wert, desto mehr Einzelfilamente sind an der Schnittstelle verklebt und desto besser sind der Fadenschluß sowie die Fadenhaftung und damit der erzielbaren Webnutzeffekt.

Zur Bestimmung des Fadenschlusses wurden Testgarne aus Polyester-Filamenten, glatt, dtex 50 f 18 mit 6 % Schlichteauflage verwendet, die sowohl direkt mit dem Shirley-Filamentcounter gemessen wurden (Manra-Wert MO in Tabelle 1), als auch vor der Messung auf dem Reutlinger Webtester 100 Beanspruchungszyklen ausgesetzt waren (Manra-Wert M100 in Tabelle 2).

Gute Klebkraftwerte und guter Fadenschluß sind bei M100-Werten unter 50 und bei einer möglichst geringen Differenz zwischen den MO- und M100-Werten gegeben.

B) Bestimmung der Feuchtigkeitsempfindlichkeit

Zur Prüfung, ob ein Schlichtemittel durch Klimaeinfluß mechanisch negativ beeinflußt wird und/oder zur Bildung von Abrieb neigt, gibt es schnell durchführbare Vortests, die nachfolgend beschrieben werden. Die entsprechenden Test-Ergebnisse bezüglich der erfindungsgemäßen Pfropfcopolymerisate sowie bezüglich der entsprechenden Vergleichsbeispiele sind in Tabelle 1 aufgeführt.

1. Beurteilung der Schlichtefilme nach Lagerung in Klimakammern bei definierter Luftfeuchtigkeit und definierter Temperatur: Zur Bestimmung der Feuchtigkeitsempfindlichkeit der Schlichte wird ein Schlichtefilm der Größe 11 x 4 cm gegossen. Er wird über Nacht an der Luft und anschließend 3 h bei 90°C im Trockenschrank getrocknet. Der Film wird anschließend bei 90 % rel. Luftfeuchte und 40°C im Klimaschrank 1d bzw. 4d klimatisiert; danach werden die Veränderung des Films visuell beurteilt.

Tabelle 1: Feuchtigkeitsempfindlichkeit von Schlichten

| Bsp. | Pfropfco-polymerisat erhalten nach Bei-spiel | Filmbeurteilung nach 1 Tag Lagerung bei 90 % relative Luft-feuchtigkeit/40°C | Filmbeurteilung nach 4 Tagen Lagerung bei 90 % relative Luft-feuchtigkeit/40°C |
|---|---|---|---|
| 8 | 1 | gelbl. klar, keine Veränd. | keine Veränderung |
| 9 | 2 | gelbl. klar, keine Veränd. | keine Veränderung |
| 10 | 3 | gelbl. klar, keine veränd. | keine Veränderung |
| 11 | 4 | weißlich klar, Ver-längerung um 0,5 cm | keine Veränderung gegen 1-Tag Lagerung |
| 12 | 5 | weißlich klar, Ver-längerung um 0,5 cm | keine Veränderung gegen 1-Tag Lagerung |
| 13 | 6 | weiß, Verlängerung um 1,5 cm | Verlängerung um 2 cm |
| 14 | 7 | weiß, Verlängerung um 1,5 cm | Verlängerung um 2 cm |
| Ver-gleichs-bei-spiel | Schlich-te Nr. | | |
| 1 | 1 | milchig trüb, inho-mogen keine Verände-rung | keine Veränderung |
| 2 | 2 | läuft aus | - |
| 3 | 3 | milchig, keine Ver-änderung | keine Veränderung |

Die Filme der erfindungsgemäßen Beispiele bleiben selbst nach einer Klimabeanspruchung von 4d homogen und intakt. Wie Vergleichsbeispiel 5 zeigt, ist der nach Vergleichsbeispiel 2 erhaltene Polyester-Film schon nach einem Tag nicht mehr intakt, während der Acrylatfilm zwar intakt, aber trübe ist (Vergleichsbeispiel 3).

2. Zahlenmäßige Erfassung des mechanischen Niveaus durch Bestimmung der Pendelhärte nach König (DIN 53157) nach 24 Stunden Lagerung der Filme bei 68 und 80 % relativer Feuchtigkeit (vgl. Tabelle 2). Als Richtwert, in Übereinstimmung mit Praxisergebnissen, kann gelten, daß die Pendelhärte bei 68 % relativer Feuchtigkeit nicht unter 20 und bei 80 % relativer Feuchtigkeit nicht unter 10 liegen sollte. Andernfalls ist die Schlichte nicht water-jet-geeignet, die Garnlagen auf den Kettbäumen verkleben (blocken) mit zunehmender Lagerung und beim Weben gibt es Abrieb sowie mechanische Strömungen.

Tabelle 2: Fadenschlußwerte und Pendelhärten der erfindungs- gemäßen Pfropfcopolymerisate und der Polymeren, die nach den Vergleichsbeispielen 1 - 3 erhalten wurden

| Bsp. | Vergl.-Bsp. | Pfropfco-polymer hergestellt nach Bsp. | Manra 0 | Manra 100[a] | Pendel-härte 68 % r.F. | 80 % r.F. |
|---|---|---|---|---|---|---|
| 15 | | 1 | 13 | 79 | 64 | 19 |
| 16 | | 2 | 11 | 33 | 63 | 21 |
| 17 | | 3 | 10 | 28 | 67 | 20 |
| 18 | | 4 | 9 | 13 | 69 | 22 |
| 19 | | 5 | 9 | 12 | 65 | 22 |
| 20 | | 6 | 9 | 14 | 70 | 17 |
| 21 | | 7 | 8 | 12 | 86 | 21 |
| | | Schlichte Nr. | | | | |
| – | 4 | 1[b] | (9) | (17) | 86 | 20 |
| | | | nicht ganz ausgewaschen | | | |
| – | 5 | 2 | 6 | 8 | 147 | 41 |
| – | 6 | 3 | 12 | 42 | 64 | 24 |

a)          Manrawerte bei 6 % Auftrag auf Polyestergarn glatt dtex 50f18, berechnet durch lineare Regression aus mindestens drei verschiedenen Auftragsmengen zwischen 3 und 8 Gew.-%

b)  Auftrag nicht genau bestimmbar, da Garne nicht ganz aus-
    gewaschen


Die erfindungsgemäßen Pfropfcopolymere zeigen guten Fadenschluß und ausreichende Pendelhärtewerte (s. Tabelle 2). Der Fadenschluß des reinen Acrylates (Vergleichsbeispiel 6) zeigt deutlich schlechtere Manra 0- und
Manra 100-Werte als die erfindungsgemäßen Pfropfcopolymere der Beispiele.


c) Bestimmung der Auswaschbarkeit

Die Schlichten gemäß den Beispielen 1 - 7 und die Vergleichsschlichten 1 - 3 wurden auf ein Diolen-Gewebe mit 5 % Auflage geklotzt. Das Gewebe wurde ausgewaschen und die Restschlichte nach Anfärbung mit Astrazonrot durch eine Remissionsmessung bei 495 nm gemäß

$$\frac{K}{S} = \frac{(1-\beta)^2}{2\beta} \quad \text{mit } \beta = \frac{\text{Reflektion}}{100}$$

bestimmt.

Der K/S-Wert gibt den Schlichtegehalt relativ zu anderen Proben an. Ein kleiner K/S-Wert entspricht einem geringen Restschlichtegehalt.

Als Maß für die Auswaschbarkeit einer Schlichte wurde der K/S-Wert in "Textilpraxis International, Juli 1991, Seite 644-646" aufgeführt. Um für Wasserdüsenwebmaschinen geeignet zu sein, sollte eine Schlichte unter Laborbedingungen (d.h. 80°C, Waschflotte mit 2 g NaOH und 1 g Netzmittel pro Liter) bei geringer Waschmechanik (AHIBA) in 10 Minuten, bei guter Waschmechanik in wenigen Sekunden bis zu 2 Minuten vollständig auswaschbar sein. Bezüglich der erhaltenen Daten siehe Tabellen 3 und 4.

Generell gibt das Aussehen einer Waschflotte einen Hinweis auf die Verträglichkeit der Schlichte mit Alkali und auf die Löslichkeit der Schlichte nach dem Waschprozeß. Eine klare Lösung zeigt eine gute Verträglichkeit und eine gute Löslichkeit der Schlichte in der Waschflotte an. Eine trübe Waschflotte zeigt eine Unverträglichkeit der Schlichte mit Alkali an und weit auf eine geringe Löslichkeit der Schlichte in der Waschflotte hin, was wiederum die Gefahr des Wiederaufziehens der Schlichte auf dem Gewebe in sich birgt.

Sofern die Schlichten ohne Netzmittel ausgewaschen werden können (vgl. Tag 4) ist dies ein zusätzlicher Beweis für ihre gute Auswaschbarkeit; ein möglicher Verzicht auf Netzmittel beim Auswaschen ist für den Anwender von Vorteil.

14

Tabelle 3: Auswaschbarkeit der Schlichten in Anwesenheit von
Netzmittel

K/S-Werte ermittelt aus Remissionsmessungen

| Bsp. | Vergl.Bsp. | Schlich-temittel gemäß Bsp. | 2 g/l NaOH 1 g/l Netzmittel 10 min. 80° | 5 g/l NaOH 1 g/l Netzmittel 10 min. 80°C | Aussehen der Waschflotte 2 g/l NaOH 1 g/l Netz-mittel |
|---|---|---|---|---|---|
| 22 | – | 1 | 0,06 | 0,07 | klar |
| 23 | – | 4 | 0,06 | 0,12 | klar |
| 24 | – | 7 | 0,06 | 0,17 | fast klar |
| – | 7 | Schlich-te 1 | 0,23 | 0,28 | stark trübe |
| – | 8 | Schlich-te 2 | 0,06 | 1,73 | trübe |
| – | 9 | Schlich-te 3 | 0,09 | 0,06 | klar |

Gemäß Tabelle 3 zeigen die erfindungsgemäßen Polymere auch bei höheren Alkalimengen im Auswaschrezept eine sehr gute Auswaschbarkeit. Die erfindungsgemäßen Polymere zeigen auch deutliche Vorteile in der Verträglichkeit der Produkte in der Waschflotte.

Tabelle 4: Auswaschbarkeit der Schlichten ohne Netzmittel

K/S-Werte ermittelt aus Remissionsmessungen

| Bsp. | Vergl.Bsp. | Schlich-temittel gemäß Bsp. | 2 g/l NaOH 10 min. 80° | 5 g/l NaOH 10 min. 80°C |
|---|---|---|---|---|
| 25 | – | 1 | 0,15 | 0,15 |
| 26 | – | 4 | 0,14 | 0,14 |
| 27 | – | 7 | 0,17 | 0,31 |
| – | 10 | Schlich-te 1 | 0,42 | 0,57 |
| – | 11 | Schlich-te 2 | 0,16 | 1,25 |
| – | 12 | Schlich-te 3 | 0,22 | 0,17 |

Gemäß Tabelle 4 zeigen die erfindungsgemäßen Pfropfcopolymere auch ohne die Verwendung eines Netzmittels eine gute Auswaschbarkeit. Sie übertreffen teilweise die Auswaschbarkeit des reinen Polyacrylates bzw. der reinen Polyesterschlichte.

**Patentansprüche**

1. Pfropfcopolymerisate von Sulfonsäuregruppen enthaltenden Polyestern als Pfropfgrundlage, dadurch gekennzeichnet, daß sie erhältlich sind durch Copolymerisieren von

   (A) Monomermischungen aus

   (a) 50 bis 95 Gew.-% mindestens eines $C_1$-$C_8$-Alkylesters der Acrylsäure und/oder der Methacrylsäure,

   (b) 5 bis 50 Gew.-% mindestens einer monoethylenisch ungesättigten Carbonsäure und/oder mindestens eines Anhydrids einer monoethylenisch ungesättigten Carbonsäure,

   (c) 0 bis 20 Gew.-% anderen wasserlöslichen monoethylenisch ungesättigten Comonomeren und

   (d) 0 bis 10 Gew.-% anderen wasserunlöslichen monoethylenisch ungesättigten Comonomeren

   in Gegenwart von

   (B) Sulfonsäure- und/oder Sulfonatgruppen enthaltenden wasserlöslichen oder in Wasser dispergierbaren Polyestern

   im Gewichtsverhältnis (A):(B) von 5:95 bis 95:5 unter Einwirkung von Radikale bildenden Polymerisationsinitiatoren.

2. Pfropfcopolymerisate nach Anspruch 1, dadurch gekennzeichnet, daß das Gewichtsverhältnis (A):(B) = 1:1 bis 5:1 beträgt.

3. Pfropfcopolymerisate nach Anspruch 1 oder 2, dadurch gekennzeichnet, daß sie erhältlich sind durch Copolymerisieren von Monomermischungen (A), die als Komponente (c) 1,5 bis 18 Gew.-% Acrylnitril, Methacrylnitril und/oder Natriumvinylsulfonat enthalten.

4. Pfropfcopolymerisate nach Anspruch 1 oder 2, dadurch gekennzeichnet, daß sie erhältlich sind durch Copolymerisieren von Monomermischungen (A), die als Komponente (c) 1,5 bis 18 Gew.-% Acrylnitril, Methacrylnitril und/oder Natriumvinylsulfonat und als Komponente (d) 1 bis 7 Gew.-% Styrol enthalten.

5. Verfahren zur Herstellung der Pfropfcopolymerisate nach Anspruch 1, dadurch gekennzeichnet, daß man

   (A) Monomermischungen aus

   (a) 50 bis 95 Gew.-% mindestens eines $C_1$- bis $C_8$-Alkylesters der Acrylsäure und/oder der Methacrylsäure,

   (b) 5 bis 50 Gew.-% mindestens einer monoethylenisch ungesättigten Carbonsäure und/oder mindestens eines Anhydrids einer monoethylenisch ungesättigten Carbonsäure,

   (c) 0 bis 20 Gew.-% anderen wasserlöslichen, monoethylenisch ungesättigten Comonomeren und

   (d) 0 bis 10 Gew.-% anderen wasserunlöslichen monoethylenisch ungesättigten Comonomeren

   in Gegenwart von

   (B) Sulfonsäure- und/oder Sulfonatgruppen enthaltenden wasserlöslichen oder wasserdispergierbaren Polyestern

   im Gewichtsverhältnis (A):(B) von 5:95 bis 95:5 nach Art einer Lösungspolymerisation oder einer Emulsionspolymerisation in Wasser unter Einwirkung Radikale bildender Polymerisationsinitiatoren polymerisiert.

6. Verwendung der Pfropfcopolymerisate nach den Ansprüchen 1 bis 4 als Schlichtemittel.

**Geänderte Patentansprüche gemaß Regel 86 (2) EPÜ**

1. Pfropfcopolymerisate von Sulfonsäuregruppen enthaltenden Polyestern als Pfropfgrundlage, dadurch gekennzeichnet, daß sie erhältlich sind durch Copolymerisieren von

   (A) Monomermischungen aus

   (a) 50 bis 95 Gew.-% mindestens eines $C_1$-$C_8$-Alkyl-esters der Acrylsäure und/oder der Methacrylsäure,

   (b) 5 bis 50 Gew. -% mindestens einer monoethylenisch ungesättigten Carbonsäure und/oder mindestens eines Anhydrids einer monoethylenisch ungesättigten Carbonsäure,

   (c) 1,5 bis 18 Gew.-% Acrylnitril, Methacrylnitril und/oder Natriumvinylsulfonat und

   (d) 0 bis 10 Gew.-% anderen wasserunlöslichen monoethylenisch ungesättigten Comonomeren

   in Gegenwart von

(B) Sulfonsäure- und/oder Sulfonatgruppen enthaltenden wasserlöslichen oder in Wasser dispergierbaren Polyestern

im Gewichtsverhältnis (A) : (B) von 5:95 bis 95:5 unter Einwirkung von Radikale bildenden polymerisationsinitiatoren.

2. Pfropfcopolymerisate nach Anspruch 1, dadurch gekennzeichnet, daß sie erhältlich sind durch Copolymerisieren von Monomermischungen (A), die als Komponente (c) 1,5 bis 18 Gern. -% Acrylnitril, Methacrylnitril und/oder Natriumvinylsulfonat und als Komponente (d) 1 bis 7 Gew. -% Styrol enthalten.

3. Verfahren zur Herstellung der Pfropfcopolymerisate nach Anspruch 1, dadurch gekennzeichnet, daß man

(A) Monomermischungen aus

(a) 50 bis 95 Gern. -% mindestens eines $C_1$- bis $C_8$-Alkylesters der Acrylsäure und/oder der Methacrylsäure,

(b) 5 bis 50 Gew. -% mindestens einer monoethylenisch ungesättigten Carbonsäure und/oder mindestens eines Anhydrids einer monoethylenisch ungesättigten Carbonsäure,

(c) 1,5 bis 18 Gew.-% Acrylnitril, Methacrylnitril und/oder Natriumvinylsulfonat enthalten und

(d) 0 bis 10 Gern -% anderen wasserunlöslichen monoethylenisch ungesättigten Comonomeren

in Gegenwart von

(B) Sulfonsäure- und/oder Sulfonatgruppen enthaltenden wasserlöslichen oder wasserdispergierbaren Polyestern

im Gewichtsverhältnis (A) : (B) von 5:95 bis 95:5 nach Art einer Lösungspolymerisation oder einer Emulsionspolymerisation in Wasser unter Einwirkung Radikale bildender Polymerisationsinitiatoren polymerisiert.

4. Verwendung der Pfropfcopolymerisate nach den Ansprüchen 1 und 2 als Schlichtemittel.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-9 010 665 (RHONE-POULENC CHIMIE)<br>* Ansprüche 1-2 *<br>* Beispiele 2,4 *<br>* Seite 1, Zeile 24 - Seite 2, Zeile 26 *<br>--- | 1-2 | C08F283/02<br>D06M15/00<br>//(C08F283/02,<br>220:06) |
| X | WO-A-9 010 666 (RHONE-POULENC CHIMIE)<br>* Anspruch 1 *<br>* Beispiele *<br>--- | 1-2 | |
| X | EP-A-0 333 547 (RHONE-POULENC CHIMIE)<br>* Ansprüche 1,25-26 *<br>* Beispiele *<br>* Seite 2, Zeile 41 - Seite 3, Zeile 8 *<br>* Seite 4, Zeile 3 - Zeile 17 *<br><br>----- | 1-2,5-6 | |
| | | | RECHERCHIERTE SACHGEBIETE (Int. Cl.5)<br><br>C08F<br>D06M |

Der vorliegende Recherchenbericht wurde für alle Patentansprüche erstellt

| Recherchenort | Abschlußdatum der Recherche | Prüfer |
|---|---|---|
| DEN HAAG | 16 OKTOBER 1992 | PERSSON E.K. |

EPO FORM 1503 03.82 (P0403)